# EUROPÄISCHE PATENTSCHRIFT

(11) **EP 0 618 051 B1**
(45) Veröffentlichungstag und Bekanntmachung des Hinweises auf die Patenterteilung: **15.05.1996**
(21) Anmeldenummer: 94101447.4
(22) Anmeldetag: 01.02.1994
(51) Int. Cl.: B27C 1/10, B23Q 16/00

(54) **Handhobelmaschine**
Hand plane
Rabot à main

(30) Priorität: 30.03.1993 DE 4310297
(43) Veröffentlichungstag der Anmeldung: 05.10.1994
(73) Patentinhaber: Festo KG, D-73734 Esslingen (DE)
(72) Erfinder: Tschacher, Hans-Dieter, D-73262 Reichenbach (DE)
(74) Vertreter: Reimold, Otto, Dr. Dipl.-Phys.

(56) Entgegenhaltungen:
- EP-A- 0 133 814
- DE-A- 3 341 219
- DE-A- 3 542 095
- US-A- 2 774 399
- US-A- 2 871 897
- US-A- 3 207 195
- US-A- 4 382 729
- PATENT ABSTRACTS OF JAPAN vol. 013, no. 133 (M-809) 4. April 1989 & JP-A-63 300 836 (MITSUBISHI METAL CORP) 8. Dezember 1988

## Beschreibung

Die Erfindung betrifft eine Handhobelmaschine mit einem rotierenden Hobelwerkzeug, einer hinter dem Hobelwerkzeug tangential zu dessen Flugkreis angebrachter Auslauftischplatte, einer Einlauftischplatte vor dem Hobelwerkzeug und einer aussen am Maschinengehäuse angeordneten Drehhandhabe zum Erzeugen einer am Maschinengehäuse geführten Verstellbewegung der Einlauftischplatte im wesentlichen rechtwinkelig zu ihrer auf ein Werkstück aufzulegenden Auflagefläche in Höhenrichtung, wobei zwischen der Drehhandhabe und der Einlauftischplatte ein Gewindetrieb angeordnet ist, der ein die Drehbewegung der Drehhandhabe mitmachendes Antriebsteil und ein mit diesem in Gewindeeingriff stehendes, mit der Einlauftischplatte verbundenes, unverdrehbar gelagertes und beim Verdrehen des Antriebsteils eine lineare Bewegung in Achsrichtung des Gewindetriebs ausführendes Verstellteil aufweist.

Eine derartige Handhobelmaschine geht beispielsweise aus der DE-OS 33 41 219 hervor. In diesem bekannten Falle befindet sich die Drehhandhabe in koaxialer Ausrichtung zu einem das Verstellteil bildenden Gewindebolzen an der Oberseite des Maschinengehäuses. Dies erfordert eine entsprechend nach vorne vorgezogene Gehäuseoberseite. Außerdem wird das Ergreifen der Drehhandhabe durch eine hinter ihr hochstehende Gehäusewand behindert.

Der vorliegenden Erfindung liegt deshalb die Aufgabe zugrunde, eine Handhobelmaschine mit den eingangs genannten Merkmalen zu schaffen, deren Verstellmechanismus für die Einlauftischplatte auch für verhältnismäßig klein bauende Hobelmaschinen geeignet ist, wobei außerdem die Bedienfreundlichkeit der Drehhandhabe verbessert werden soll.

Diese Aufgabe wird erfindungsgemäß dadurch gelöst, daß die Drehhandhabe nach vorne weisend am Maschinengehäuse angeordnet ist, so daß die Achsrichtung des Gewindetriebs stumpfwinkelig zur Höhenrichtung mit von vorne oben nach hinten unten gerichteter Neigung verläuft, und daß das Verstellteil an seinem der Drehhandhabe abgewandten Bereich hinter seinem mit dem Antriebsteil in Gewindeeingriff stehenden Gewindepartie ein mit der Einlauftischplatte verbundenes, die Bewegung des Verstellteils in die Verstellbewegung der Einlauftischplatte umsetzendes Verstellglied trägt, das eine in Seitenansicht gesehen zur Achsrichtung des Gewindetriebs winkelig angeordnete Gleitfläche aufweist, die auf einer mit der Einlauftischplatte verbundenen Gegengleitfläche aufsitzt und mittels einer ein Verschieben der Gleitfläche auf der Gegengleitfläche gestattenden Halteeinrichtung gegen die Gegengleitfläche gehalten ist, derart, daß sich das Verstellglied beim Verdrehen der Drehhandhabe in Achsrichtung des Gewindetriebs bewegt und unter Verlagerung der Einlauftischplatte in Höhenrichtung auf der Gegengleitfläche verschiebt.

Auf diese Weise kann die Drehhandhabe an der Gehäusevorderseite angebracht werden, so daß die Drehhandhabe und damit verbunden der Gewindetrieb den darüber befindlichen Gehäusebereich nicht tangiert, so daß dieser entweder kleiner gemacht oder zu anderen Zwecken, beispielsweise zur Kanalführung einer Staubabsaugung, genutzt werden kann. Dazuhin kann die nach vorne weisende Drehhandhabe rundum freistehend und somit bedienungsfreundlich angeordnet werden.

Ferner erhält man nicht nur eine sehr einfach gestaltete und somit auch kostengünstig herstellbare Umsetzung der in Achsrichtung des Gewindetriebs gerichteten Bewegung des Verstellteils in die vertikale Verstellbewegung der Einlauftischplatte sondern gleichzeitig auch eine sozusagen einem Formschluß entsprechende Abstützung der Einlauftischplatte an der Gleitfläche des Verstellglieds beim Betrieb, so daß die auf dem noch nicht gehobelten Werkstückbereich aufliegende Einlauftischplatte eine definierte Hohenlage einnimmt und nicht nach oben hin ausweichen kann. Dies ist beim Stande der Technik gemäß der DE-OS 33 41 219 anders. Dort drückt die Einlauftischplatte beim Betrieb nicht gegen eine feststehende Fläche sondern gegen eine Schraubenfeder. Diese Schraubenfeder stellt im übrigen auch ein Verschleißteil dar, so daß die erfindungsgemäße Anordnung auch in dieser Hinsicht vorteilhaft ist.

Aus der EP-OS 0 133 814 ist zwar eine Handhobelmaschine mit einer Drehhandhabe bekannt, die nach vorne weisend am Maschinengehäuse angeordnet ist, so daß die Achsrichtung des Gewindetriebs stumpfwinkelig zur Höhenrichtung mit von vorne oben nach hinten unten gerichteter Neigung verläuft. Es handelt sich hier jedoch um eine Handhobelmaschine, bei der die Höhenverstellung der Einlauftischplatte nicht mittels eines Gewindetriebs sondern eines Nockentriebs erfolgt, indem mit der Drehhandhabe eine Nockenfläche fest verbunden ist, die auf einer mit der Einlauftischplatte verbundenen Gegengleitfläche aufsitzt, die unter Federwirkung gegen die Nockenfläche gehalten ist.

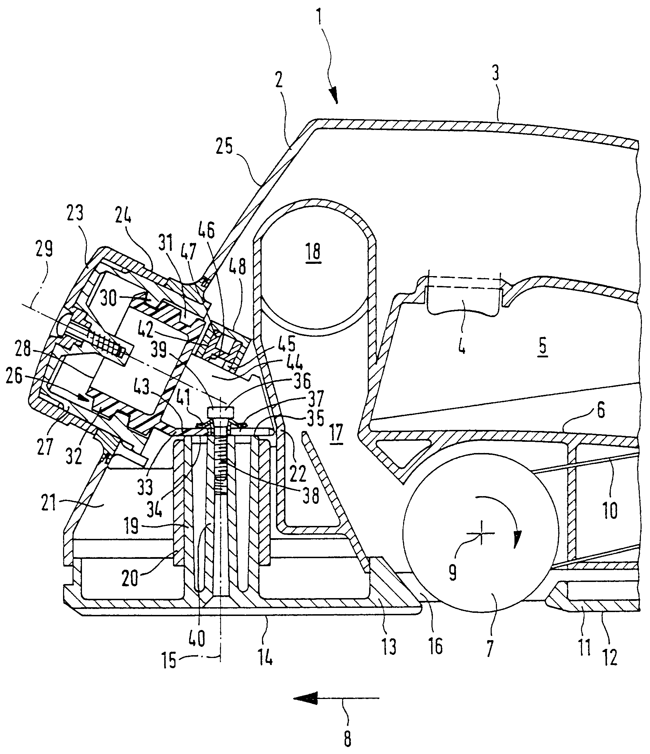

Ein Ausführungsbeispiel der Erfindung sowie zweckmäßige Ausgestaltungen werden nun anhand der einzigen Figur der Zeichnung erläutert, die den vorderen Bereich einer Handhobelmaschine in schematischer Darstellung im vertikalen Längsschnitt zeigt, wobei solche Teile, die in keinem Zusammenhang mit der Erfindung stehen, weggelassen sind.

Die Handhobelmaschine 1 weist ein Maschinengehäuse 2 auf, das an der Maschinenoberseite einen bügelartigen Handgriff 3 zum Halten der Maschine bildet, an dessen Unterseite ein Ein/Aus-Schalter 4 zum Ein- bzw. Ausschalten des nicht dargestellten Maschinenmotors angeordnet ist. Unterhalb des Handgriffs 3 befindet sich ein frei liegender Zwischenraum 5, so daß der Handgriff 3 von der ihn haltenden Hand umgriffen werden kann. Unterhalb dieses Zwischenraums 5 ist ein unterer Gehäusebereich 6 angeordnet, in dem ein beim Betrieb um eine quer zur Vorschubrichtung 8 gerichtete Achslinie 9 in Richtung des eingezeichneten Pfeiles rotierendes Hobelwerkzeug gelagert ist. Der Antrieb des Hobelwerkzeugs 7 erfolgt mittels eines Riemens 10.

Das Hobelwerkzeug 7 liegt an der Unterseite des Gehäuses 2 frei und steht etwas vor die Gehäuseunterseite vor. Mit Bezug auf die Vorschubrichtung 8 hinter dem Hobelwerkzeug 7 ist an der Gehäuseunterseite eine Auslauftischplatte 11 angeordnet, deren Unterseite 12 tangential zum Flugkreis des Hobelwerkzeugs 7 ausgerichtet ist. Die Auslauftischplatte 11 ist bezüglich des Hobelwerkzeugs 7 unverstellbar. Vor dem Hobelwerkzeug 7 wird das Maschinengehäuse 2 unten durch eine Einlauftischplatte 13 abgeschlossen, die im Unterschied zur Auslauftischplatte 11 rechtwinkelig zu ihrer die Plattenunterseite bildenden Auflagefläche 14 in Höhenrichtung 15 verstellbar ist. In der Zeichnung ist die Einlauftischplatte 13 in ihrer untersten Position dargestellt, in der ihre Auflagefläche 14 ebenfalls tangential zum Flugkreis des Hobelwerkzeugs 7 verläuft.

Mit Hilfe der Höhenverstellung der Einlauftischplatte 13 läßt sich die Schnittiefe, mit der das Werkstück bearbeitet wird, einstellen. Vor dem Hobelvorgang verstellt man die Einlauftischplatte 13 um das Ausmaß der gewünschten Schnittiefe nach oben. Sodann setzt man die Hobelmaschine mit ihrer Einlauftischplatte 13 auf das noch ungehobelte Werkstück. Schiebt man sie dann auf dem Werkstück vor, erfolgt hinter der Einlauftischplatte 13 mittels des Hobelwerkzeugs 7 ein Spanabtrag. Die Auslauftischplatte 11 liegt dann bei der weiteren Vorschubbegung auf der gehobelten Werkstückfläche. Bei der dargestellten Handhobelmaschine können die entstehenden Späne abgesaugt werden. Hierzu ist an der Maschinenunterseite zwischen dem Hobelwerkzeug 7 und der Einlauftischplatte 13 ein Spaneintrittsspalt 16 vorhanden, an den sich ein durch innere Gehäusewände begrenzter Spänekanal 17 anschließt, der zu einer seitlichen Auswurföffnung 18 führt, an den ein äußerer Saugschlauch angeschlossen werden kann. Der Spänekanal 17 erstreckt sich in dem vor dem Hobelwerkzeug 7 befindlichen Gehäusebereich nach oben.

Die Einlauftischplatte 13 kann, wie erwähnt, zum Einstellen der Schnittiefe in Höhenrichtung 15 verstellt werden. Dabei ist die Einlauftischplatte 13 am Gehäuse 2 geführt. Hierzu ist beim Ausführungsbeispiel im mittleren Bereich der Einlauftischplatte 13 an diese ein in Höhenrichtung 15 hochstehender Führungsfortsatz 19 angesetzt, der in einer entsprechenden Querschnitt aufweisenden Führungshülse 20 des Gehäuses 2 geführt ist, die über Gehäuserippen 21 mit der Aussenwandung des Maschinengehäuses verbunden sein kann. Der Querschnitt der Führungshülse 20 und des Führungsfortsatzes 19 ist kreisförmig, er könnte jedoch auch eine hiervon abweichende Gestalt besitzen. Die von der Führungshülse 20 gebildete Gehäuseführung für den Führungsfortsatz 19 befindet sich in der Nachbarschaft der den Spänekanal 17 vorne begrenzenden Gehäusewand 22.

Die Verstellbewegung der Einlauftischplatte 13 in Höhenrichtung 15 wird mittels einer aussen am Maschinengehäuse 2 angeordneten Drehhandhabe 23 erzeugt. Beim Ausführungsbeispiel handelt es sich bei der Drehhandhabe 23 um einen kreisrunden Drehknopf. Durch Verdrehen der Drehhandhabe 23 in der einen oder anderen Richtung wird die Einlauftischplatte 13 nach oben oder unten verlagert. Dabei ist vorgesehen, daß die Drehhandhabe 23 zum Verstellen der Einlauftischplatte 13 zwischen ihren beiden Endstellungen um einen Winkel von höchstens 360°, normalerweise weniger, verdreht werden muß. Am Umfang der Drehhandhabe 23 kann eine Maßskala 24 zum Ablesen des jeweiligen Drehwinkels vorhanden sein, der ein Maß für die Höhenverstellung der Einlauftischplatte 13 ist. Ein zur Maßskala 24 gehörender Ablesestrich befindet sich ortsfest am Maschinengehäuse 2. Es versteht sich, daß die Anordnung auch umgekehrt getroffen sein kann, daß die Maßskala am Gehäuse und der Ablesestrich an der Drehhandhabe 23 sitzt.

Die Drehhandhabe 23 ist an der Gehäuse-Vorderseite 25 angeordnet, die beim Ausführungsbeispiel vor dem Handgriff 3 schräg nach vorne unten verläuft. Sie erstreckt sich dabei im oberen Bereich in der Nähe des Spänekanals 17 bzw. der Auswurföffnung 18 hieran vorbei. Die Drehhandhabe 23 ist somit nach vorne weisend am Maschinengehäuse 2 angeordnet.

Zwischen der Drehhandhabe 23 und der Einlauftischplatte 13 ist ein Gewindetrieb 26 angeordnet, der ein die Drehbewegung der Drehhandhabe 23 mitmachendes, d.h. drehfest mit der Drehhandhabe verbundenes Antriebsteil 27 und ein mit diesem in Gewindeeingriff stehendes Verstellteil 28 aufweist. Dabei ist das Verstellteil 28 unverdrehbar gelagert, so daß es beim Verdrehen des Antriebsteils 27 eine lineare Bewegung in Achsrichtung 29 des Gewindetriebs 26, die mit der Drehachse der Drehhandhabe 23 zusammenfällt, ausführt. Das Antriebsteil 27 weist eine in den Drehknopf 23 eingesteckte zylindrische Partie auf, an deren Innenumfang ein Gewindesteg 30 angeformt ist, dem eine Gewindenut 31 an der Aussenseite der ebenfalls zylindrischen Gewindepartie 32 des Verstellteils 28 zugeordnet ist.

Die Achsrichtungen 29 des Gewindetriebs 26 verläuft stumpfwinkelig zur Höhenrichtung 15 mit von vorne oben nach hinten unten gerichteter Neigung, also der schrägen Gehäuse-Vorderseite 25 entsprechend, zu der die Achsrichtung 29 im wesentlichen rechtwinkelig steht.

Das Verstellteil 28 ist mit der Einlauftischplatte 13 verbunden und trägt hierzu an seinem der Drehhandhabe 23 abgewandten Bereich hinter seiner mit dem Antriebsteil 27 in Gewindeeingriff stehenden Gewindepartie 32 ein mit der Einlauftischplatte 13 verbundenes, die in Achsrichtung 29 gerichtete Bewegung des Verstellteils 28 in die in Höhenrichtung 15 gerichtete Verstellbewegung der Einlauftischplatte 13 umsetzendes Verstellglied 33. Dabei ist die Anordnung zweckmäßigerweise ferner so getroffen, daß das Verstellglied 33 in Seitenansicht gesehen eine zur Achsrichtung 29 des Gewindetriebs 26 winkelig angeordnete, keilartig wirkende Gleitfläche 34 aufweist, die auf einer mit der Einlauftischplatte 13 verbundenen Gegengleitfläche 35 aufsitzt und mittels einer ein Verschieben der Gleitfläche 34 auf der Gegengleitfläche 35 gestattenden Halteeinrichtung 36 gegen die Gegengleitfläche 35 gehalten ist. Dabei steht die Gleitfläche 34 zweckmäßigerweise rechtwinkelig zur Höhenrichtung 15, prinzipiell könnte dies jedoch auch anders sein. Das Verstellteil 28 sitzt also mit der Gleitfläche 34 auf der fest mit der Einlauftischplatte 13 verbundenen Gegengleitfläche 35 auf, wobei die Verbindung zwischen Gleitfläche 34 und Gegengleitfläche 35 so ist, daß die Gleitfläche 34 bei einer Bewegung des Verstellteils 28 in Achsrichtung 29 über die Gegengleitfläche 35 gleiten kann. Beim Verdrehen der Drehhandhabe 23 wird also die Gleitfläche 34 zusammen mit dem Verstellteil 28 in Achsrichtung 29 bewegt, wobei wegen des zwischen der Achsrichtung 29 und der Gleitfläche 34 bestehenden Winkels und des Zusammenhalts von Gleitfläche 34 und Gegengleitfläche 35 eine in Höhenrichtung 15 gerichtete Bewegungskomponente auf die in Höhenrichtung 15 am Gehäuse 2 geführt angeordnete Einlauftischplatte 13 übertragen wird.

Oder anders ausgedrückt kann man die Bewegung des Verstellteils 28 bzw. von dessen Verstellglied 33 in zwei Bewegungskomponenten zerlegen, von denen die eine in Höhenrichtung 15 und die andere rechtwinkelig hierzu gerichtet ist. Von diesen beiden Komponenten ist an der Einlauftischplatte 13 nur die Vertikalkomponente wirksam.

Diese konstruktiv einfache und daher auch billig herzustellende Kraftumlenkung bringt den weiteren Vorteil mit sich, daß die Einlauftischplatte 13 über die Gegengleitfläche 35 stets an der Gleitfläche 34 des Verstellteils 28 anliegt und somit in Höhenrichtung 15 fest abgestützt ist. Die Einlauftischplatte 13 behält deshalb ihre eingestellte Höhenlage beim Betrieb unverändert bei, wenn sie gegen das zu hobelnde Werkstück gedrückt wird.

Am Verstellglied 33 ist bei der Gleitfläche 34 ein Längsschlitz 37 ausgebildet, der in der Gleitrichtung der Gleitfläche 34 verläuft. Dieser Längsschlitz 37 wird von einem Halteteil 38 der Halteeinrichtung 36 durchgriffen, das einerseits fest mit der Einlauftischplatte 13 verbunden ist und andererseits mit einem Kopfstück 39 das Verstellglied 33 hintergreift. Auf diese Weise werden die Gleitfläche 34 und die Gegengleitfläche 35 gleitbar gegeneinander gehalten.

Das Halteteil 38 ist beim zweckmäßigen Ausführungsbeispiel ein mit der Einlauftischplatte 13 in Schraubverbindung stehender Gewindebolzen.

Der bereits erwähnte Führungsfortsatz 19, der an die Einlauftischplatte 13 nach oben stehend angesetzt ist, bildet mit seiner Stirnseite die Gegengleitfläche 35. Der Gewindebolzen 38 ist im Zentrum des Führungsfortsatzes 19 in eine in diesem ausgebildete Gewindebohrung eingeschraubt, wobei der Führungsfortsatz 19 hierzu eine zentral hochstehende Befestigungshülse 40 enthält. Bei der Montage wird der Gewindebolzen 38 also von oben her durch den Längsschlitz 37 des Verstellglieds 33 gesteckt und in die Befestigungshülse 40 eingeschraubt.

Um ein spielfreies Gleiten der Gleitfläche 34 auf der Gegengleitfläche 35 zu erhalten, kann die Gegengleitfläche 35 federnd gegen die Gleitfläche 34 gehalten sein. Hierzu ist beim Ausführungsbeispiel zwischen dem Kopfstück 39 des Halteteils 38 und dem Verstellglied 33 eine Feder 41, insbesondere eine scheibenähnliche Feder, angeordnet.

Das Verstellglied 33 kann, drückt man von unten gegen die Einlauftischplatte 13, nicht nach oben hin ausweichen. Dies wird durch die feste Verbindung des Verstellglieds 33 mit der Gewindepartie 32 des Verstellteils 28 sichergestellt, die bei nicht betätigter Drehhandhabe 23 vom Antriebsteil 27 unverrückbar festgehalten wird. Dem Verstellglied 33 kann auch zusätzlich noch eine obere, gehäusefeste Abstützung 42 zugeordnet sein.

Beim zweckmäßigen Ausführungsbeispiel ist das Verstellglied 33 einstückig an das Verstellteil bzw. dessen Gewindepartie 32 angeformt, und zwar an deren Rückseite. Dabei kann das Verstellteil 28 einschließlich des Verstellgliedes 33 als Kunststoff-Formteil gefertigt werden.

In diesem Zusammenhang ist es ferner vorteilhaft, daß das Verstellglied 33 einen U-förmigen Querschnitt aufweisen kann, wobei der Verstellglied-Quersteg 43 den Längsschlitz 37 und die Gleitfläche 34 bildet und die beiden vom Quersteg 43 hochstehenden Verstellgliedschenkel 44, von denen im dargestellten Schnitt nur einer sichtbar ist, am Maschinengehäuse 2 geführt sind.

Des weiteren kann vorgesehen sein, daß das Verstellteil 28, zweckmäßigerweise am Verstellglied 33, einen Anschlag 45 aufweist, der beim Ausführungsbeispiel an der Oberkante des Verstellgliedschenkels 44 sitzt. Dieser Anschlag 45 dient zur Begrenzung der Linearbewegung des Verstellteils 28 in Achsrichtung 29. Dabei ist dem Anschlag 45 ein maschinengehäuseseitiger Gegenanschlag 46 zugeordnet. In Weiterbildung dieser Ausführungsform kann der Gegenanschlag 46 aus der zur Achsrichtung 29 parallelen Bewegungsbahn des Anschlags 45 bewegbar sein. Beim zweckmäßigen Ausführungsbeispiel ist der Gegenanschlag 46 hierzu an einem am Maschinengehäuse 2 geführten Schieber 47 od.dgl. angeordnet. Im dargestellten Falle ist der Schieber 47 rechtwinkelig zur Zeichenebene von außen her zwischen der dargestellten wirksamen Stellung und seiner unwirksamen Stellung verschiebbar. Zur verschieblichen Führung des Schiebers 47 kann am Maschinengehäuse 2 ein ihn umgebender Führungsansatz 48 vorhanden sein, der gleichzeitig die Abstützung 42 bilden kann.

In seiner wirksamen Stellung begrenzt der Gegenanschlag 46 also den Verstellweg des Verstellteils 28 und somit die Verstellung der Einlauftischplatte in Höhenrichtung. In seiner unwirksamen Stellung kann das Verstellteil jedoch noch weiter in Achsrichtung 29 und die Einlauftischplatte 13 somit weiter in Höhenrichtung verstellt werden. Dabei befindet sich der Gegenanschlag 46 bzw. der Schieber 47 bei normalen Werkstückbearbeitungen in seiner wirksamen Stellung, d.h. der Abstand zwischen dem Anschlag 45 und dem Gegenanschlag 46 ist so gewählt, daß er für die normalerweise verwendeten Schnittiefen ausreicht. Der Gegenanschlag 46 verhindert somit in seiner wirksamen Stellung die Einstellung einer zu großen Schnittiefe. Für Sonderfälle, wenn aus irgend einem Grunde eine größere Schnittiefe gewünscht ist, kann der Gegenanschlag 46 dann in die unwirksame Stellung bewegt werden.

Da sich der Schieber 47 also normalerweise in seiner wirksamen Stellung befindet, kann er in Richtung auf diese Stellung hin federbelastet sein.

Das Maschinengehäuse 2 kann aus zwei Halbschalen gefertigt sein, die entlang der in der Zeichenebene liegenden Trennebene aneinander stoßen. Das Gehäuse müßte deshalb in der Zeichnung unschraffiert gezeichnet sein. Der Übersichtlichkeit wegen wurde jedoch auch hier eine Schraffur angebracht.

## Patentansprüche

1. Handhobelmaschine mit einem rotierenden Hobelwerkzeug (7), einer hinter dem Hobelwerkzeug (7) tangential zu dessen Flugkreis angebrachten Auslauftischplatte (11), einer Einlauftischplatte (13) vor dem Hobelwerkzeug (7) und einer aussen am Maschinengehäuse (2) angeordneten Drehhandhabe (23) zum Erzeugen einer am Maschinengehäuse (2) geführten Verstellbewegung der Einlauftischplatte (13) im wesentlichen rechtwinkelig zu ihrer auf ein Werkstück aufzulegenden Auflagefläche (14) in Höhenrichtung, wobei zwischen der Drehhandhabe (23) und der Einlauftischplatte (13) ein Gewindetrieb angeordnet ist, der ein die Drehbewegung der Drehhandhabe (23) mitmachendes Antriebsteil (27) und ein mit diesem in Gewindeeingriff stehendes, mit der Einlauftischplatte (13) verbundenes, unverdrehbar gelagertes und beim Verdrehen des Antriebsteils (27) eine lineare Bewegung in Achsrichtung (29) des Gewindetriebs ausführendes Verstellteil (28) aufweist, dadurch gekennzeichnet, daß die Drehhandhabe (23) nach vorne weisend am Maschinengehäuse (2) angeordnet ist, so daß die Achsrichtung (29) des Gewindetriebs (26) stumpfwinkelig zur Höhenrichtung (15) mit von vorne oben nach hinten unten gerichteter Neigung verläuft, und daß das Verstellteil (28) an seinem der Drehhandhabe (23) abgewandten Bereich hinter seiner mit dem Antriebsteil (27) in Gewindeeingriff stehenden Gewindepartie (32) ein mit der Einlauftischplatte (13) verbundenes, die Bewegung des Verstellteils (28) in die Verstellbewegung der Einlauftischplatte (13) umsetzendes Verstellglied (33) trägt, das eine in Seitenansicht gesehen zur Achsrichtung (29) des Gewindetriebs (27) winkelig angeordnete Gleitfläche (34) aufweist, die auf einer mit der Einlauftischplatte (13) verbundenen Gegengleitfläche (35) aufsitzt und mittels einer ein Verschieben der Gleitfläche (34) auf der Gegengleitfläche (35) gestattenden Halteeinrichtung (36) gegen die Gegengleitfläche (35) gehalten ist derart, daß sich das Verstellglied (34) beim Verdrehen der Drehhandhabe (23) in Achsrichtung (29) des Gewindetriebs bewegt und unter Verlagerung der Einlauftischplatte (13) in Höhenrichtung auf oder von der Gegengleitfläche (35) verschiebt.

2. Handhobelmaschine nach Anspruch 1, dadurch gekennzeichnet, daß die Gleitfläche (34) im wesentlichen rechtwinkelig zur Höhenrichtung (15) steht.

3. Handhobelmaschine nach Anspruch 1 oder 2, dadurch gekennzeichnet, daß die Halteeinrichtung (36) ein einen Längsschlitz (37) im Verstellglied (33) durchgreifendes Halteteil (38) enthält, das einerseits fest mit der Einlauftischplatte (13) verbunden ist und andererseits mit einem Kopfstück (39) das Verstellglied (33) hintergreift.

4. Handhobelmaschine nach Anspruch 3, dadurch gekennzeichnet, daß das Halteteil (38) ein mit der Einlauftischplatte (13) in Schraubverbindung stehender Gewindebolzen ist.

5. Handhobelmaschine nach einem der Ansprüche 1 bis 4, dadurch gekennzeichnet, daß die Gegengleitfläche (35) federnd gegen die Gleitfläche (34) gehalten ist.

6. Handhobelmaschine nach Anspruch 3 oder 4, dadurch gekennzeichnet, daß zwischen dem Kopfstück (39) des Halteteils (38) und dem Verstellglied (33) eine Feder (41), insbesondere eine scheibenähnliche Feder angeordnet ist.

7. Handhobelmaschine nach einem der Ansprüche 1 bis 6, dadurch gekennzeichnet, daß im mittleren Bereich der Einlauftischplatte (13) an diese ein in Höhenrichtung (15) hochstehender, am Maschinengehäuse (2) geführter Führungsfortsatz (19) angesetzt ist, dessen Stirnseite die Gegengleitfläche (35) bildet.

8. Handhobelmaschine nach Anspruch 7 sofern Anspruch 7 von Anspruch 4 abhängt, dadurch gekennzeichnet, daß der den Längsschlitz (37) des Verstellglieds (33) durchgreifende Gewindebolzen (38) der Halteeinrichtung in den Führungsfortsatz (19) eingeschraubt ist.

9. Handhobelmaschine nach einem der Ansprüche 1 bis 8, dadurch gekennzeichnet, daß das Verstellglied (33) einstückig an das Verstellteil (28) angeformt ist.

10. Handhobelmaschine nach einem der Ansprüche 1 bis 9, dadurch gekennzeichnet, daß das Verstellglied (33) einen U-förmigen Querschnitt aufweist, wobei ein Verstellglied-Quersteg (43) die Gleitfläche (34) bildet und die beiden vom Quersteg (43) hochstehenden Verstellgliedschenkel (44) an einem Maschinengehäuse (2) geführt sind.

11. Handhobelmaschine nach einem der Ansprüche 1 bis 10, dadurch gekennzeichnet, daß das Verstellteil (28), zweckmäßigerweise am Verstellglied (33), einen seine lineare Bewegung in Achsrichtung (29) des Gewindetriebs (26) begrenzenden Anschlag (45) aufweist, dem ein maschinengehäuseseitiger Gegenanschlag (46) zugeordnet ist.

12. Handhobelmaschine nach Anspruch 11, dadurch gekennzeichnet, daß der Gegenanschlag (46) zur Vergrößerung des Verstellwegs aus der Bewegungsbahn des Anschlags (45) bewegbar ist.

13. Handhobelmaschine nach Anspruch 12, dadurch gekennzeichnet, daß der Gegenanschlag (46) an einem am Maschinengehäuse (2) geführten Schieber (47) od.dgl. angeordnet ist.

## Claims

1. Hand-operated planer with a rotating planing tool (7), a discharge platen (11) fitted behind the planing tool (7) at a tangent to its circular path, a feed platen (13) ahead of the planing tool (7) and a turning handle (23) located outside the machine housing (2) to generate, guided on the machine housing (2), an adjusting movement in the vertical direction of the feed platen (13) essentially at right angles to its bearing surface (14) for placing on a workpiece, wherein arranged between the turning handle (23) and the feed platen (13) is a threaded drive which has a drive element (27) which follows the rotary movement of the turning handle (23) and an adjusting section (28) in threaded engagement with the drive element, connected to the feed platen (13), unrotatably mounted and executing a linear movement in the axial direction (29) of the threaded drive when the drive element (27) rotates, characterized in that the turning handle (23) is mounted facing forwards on the machine housing (2) so that the axial direction (29) of the threaded drive (26) runs at an obtuse-angle to the vertical direction (15), sloping from top front to bottom rear, and that the adjusting section (28) supports, on that part of it facing away from the turning handle (23), behind its threaded section (32) in threaded engagement with the drive element (27), an adjusting element (33) connected to the feed platen (13) which converts the movement of the adjusting section (28) into the adjusting movement of the feed platen (13), with a slide surface (34) which in side view is mounted at an angle to the axial direction (29) of the threaded drive, which rests on a mating slide surface (35) connected to the feed platen (13) and is held against the mating slide surface (35) by means of a retaining device (36) which permits sliding of the slide surface (34) on the mating slide surface (35) in such a way that, when the turning handle (23) is turned in the axial direction (29) of the threaded drive, the adjusting element (34) moves and, displacing the feed platen (13), shifts vertically on to or away from the mating slide surface (35).

2. Hand-operated planer according to claim 1, characterized in that the slide surface is essentially at right-angles to the vertical direction (15).

3. Hand-operated planer according to claim 1 or 2, characterized in that the retaining device (36) contains a retaining element (38) which engages through a longitudinal slot (37) in the adjusting element (33), while being at one end connected firmly to the feed platen (13) and at the other end engaging from the rear via a head section (39) with the adjusting element (33).

4. Hand-operated planer according to claim 3, characterized in that the retaining element (38) is a threaded pin in screwed connection with the feed platen (13).

5. Hand-operated planer according to any of claims 1 to 4, characterized in that the mating slide surface (35) is spring-mounted against the slide surface (34).

6. Hand-operated planer according to claim 3 or 4, characterized in that a spring (41), in particular a disc-like spring, is mounted between the retaining element (38) and the adjusting element (33).

7. Hand-operated planer according to any of claims 1 to 6, characterized in that, attached to the central area of the feed platen (13) and extending vertically from it, is a guide extension (19) guided on the machine housing (2), the end face of which forms the mating slide surface (35).

8. Hand-operated planer according to claim 7, in so far as claim 7 depends on claim 4, characterized in that the threaded pin (38) of the retaining device which engages through the longitudinal slot (37) of the adjusting element (35), is screwed into the guide extension (19).

9. Hand-operated planer according to any of claims 1 to 8, characterized in that the adjusting element (33) is moulded integrally on to the adjusting section (28).

10. Hand-operated planer according to any of claims 1 to 9, characterized in that the adjusting element (33) has a U-shaped cross-section, with a transverse web (43) of the adjusting element forming the slide surface (34) and the two adjusting element legs (44) extending upwards from the transverse web (43) guided on a machine housing (2).

11. Hand-operated planer according to any of claims 1 to 10, characterized in that the adjusting section (28), expediently on the adjusting element (33), has a stop (45) limiting its linear movement in the axial direction (29) of the threaded drive (26), to which is assigned a counter-stop (46) on the machine housing side.

12. Hand-operated planer according to claim 11, characterized in that, to increase the adjustment path, the counter-stop (46) can be moved out of the movement path of the stop (45).

13. Hand-operated planer according to claim 12, characterized in that the counter-stop (46) is mounted on a slide (47) or the like guided on the machine housing (2).

## Revendications

1. Machine à raboter manuelle avec un outil à raboter (7) tournant, une plaque de table de sortie (11) placée derrière l'outil à raboter (7), tangentiellement à son cercle de trajectoire, une plaque de table d'entrée (13) devant l'outil à raboter (7) et une poignée tournante (23), placée à l'extérieur sur le carter (2) de la machine, pour produire un mouvement de réglage, guidé sur le carter (2) de la machine, de la plaque de table d'entrée (13), sensiblement perpendiculaire à sa surface d'appui (14), reposant sur une pièce à usiner, dans le sens de la hauteur, entre la poignée tournante (23) et la plaque de table d'entrée (13) étant placé un mécanisme à pas de vis, qui comporte un élément d'entraînement (27) accompagnant le mouvement de rotation de la poignée (23) et un élément de réglage (28) en engagement fileté avec celui-ci, relié à la plaque de table d'entrée (13), et monté de manière à ne pouvoir tourner et exécutant, lors de la rotation de l'élément d'entraînement (27), un déplacement linéaire dans la direction axiale (29) du mécanisme à pas de vis, caractérisée en ce que la poignée tournante (23) est placée, dirigée vers l'avant, sur le carter (2) de la machine, de sorte que la direction axiale (29) du mécanisme à pas de vis (26) s'étend selon un angle obtus par rapport au sens de la hauteur (15), avec inclinaison dirigée de l'avant et le haut vers l'arrière et le bas, et en ce que l'élément de réglage (28) porte, sur sa zone tournée à l'opposé de la poignée tournante (23), derrière sa partie filetée (32) en liaison filetée avec l'élément d'entraînement (27), un organe de réglage (33) relié à la plaque de table d'entrée (13), convertissant le mouvement de l'élément de réglage (28) dans le mouvement de réglage de la plaque de table d'entrée (13), lequel organe de réglage présente une surface de glissement (34), disposée selon un angle, vue de côté, par rapport à la direction axiale (29) du mécanisme à pas de vis (27), qui repose sur une contre-surface de glissement (35), reliée à la plaque de table d'entrée (13) et qui est maintenue contre la contre-surface de glissement (35), au moyen d'un dispositif de maintien (36), autorisant un déplacement de la surface de glissement (34) sur la contre-surface de glissement (35), de manière que l'organe de réglage (34) se déplace, lors de la rotation de la poignée tournante (23), dans la direction axiale (29) du mécanisme à pas de vis et coulisse sur ou à partir de la contre-surface de glissement (35), en déplaçant ainsi la plaque de table d'entrée (13) dans le sens de la hauteur.

2. Machine à raboter manuelle selon la revendication 1, caractérisée en ce que la surface de glissement (34) est sensiblement à angle droit par rapport au sens de la hauteur (15).

3. Machine à raboter manuelle selon la revendication 1 ou 2, caractérisée en ce que le dispositif de maintien (36) comprend un élément de maintien (38) traversant une fente allongée (37) dans l'organe de réglage (33), lequel élément de maintien est relié d'une part fixement à la plaque de table d'entrée (13) et passe d'autre part derrière l'organe de réglage (33), par une partie de tête (39).

4. Machine à raboter manuelle selon la revendication 3, caractérisée en ce que l'élément de maintien (38) est un boulon en liaison vissée avec la plaque de table d'entrée (13).

5. Machine à raboter manuelle selon l'une des revendications 1 à 4, caractérisée en ce que la contre-surface de glissement (35) est maintenue de façon élastique contre la surface de glissement (34).

6. Machine à raboter manuelle selon la revendication 3 ou 4, caractérisée en ce qu'entre la partie de tête (39) de l'élément de maintien (38) et l'organe de réglage (33) est placé un ressort (41), en particulier un ressort en forme de rondelle.

7. Machine à raboter manuelle selon l'une des revendications 1 à 6, caractérisée en ce que dans la zone centrale de la plaque de table d'entrée (13) est placé un appendice de guidage (19) se tenant verticalement dans le sens de la hauteur (15), guidé sur le carter (2) de la machine, dont la face frontale forme la contre-surface de glissement (35).

8. Machine à raboter manuelle selon la revendication 7, dépend entre de la revendication 4, caractérisée en ce que le boulon (38), traversant la fente allongée (37) de l'organe de réglage (33), du dispositif de maintien, est vissé dans l'appendice de guidage (19).

9. Machine à raboter manuelle selon l'une des revendications 1 à 8, caractérisée en ce que l'organe de réglage (33) est formé d'une seule pièce avec l'élément de réglage (28).

10. Machine à raboter manuelle selon l'une des revendications 1 à 9, caractérisée en ce que l'organe de réglage (33) présente une section transversale en U, une traverse (43) de l'organe de réglage formant la surface de glissement (34) et les deux branches (44) de l'organe de guidage, dépassant verticalement de la traverse (43), étant guidées sur un carter (2) de la machine.

11. Machine à raboter manuelle selon l'une des revendications 1 à 10, caractérisée en ce que l'élément de réglage (28) présente, avantageusement sur l'organe de réglage (33), une butée (45) limitant son déplacement linéaire dans la direction axiale (29) du mécanisme à pas de vis (26), à laquelle est associée une contre-butée (46) du côté du carter de la machine.

12. Machine à raboter manuelle selon la revendication 11, caractérisée en ce que, pour augmenter la course de réglage, la contre-butée (46) est déplaçable en s'éloignant de la trajectoire de la butée (45).

13. Machine à raboter manuelle selon la revendication 12, caractérisée en ce que la contre-butée (46) est placée sur un curseur (47) ou similaire, guidé sur le carter (2) de la machine.
